# EUROPÄISCHE PATENTSCHRIFT

(11) **EP 2 240 117 B1**
(45) Veröffentlichungstag und Bekanntmachung des Hinweises auf die Patenterteilung: **08.08.2012**
(21) Anmeldenummer: 09718971.6
(22) Anmeldetag: 25.02.2009
(51) Int. Cl.: F27B 17/02, F27D 5/00, A61C 13/12, A61C 13/20

(54) **BRENNTISCH FÜR EINEN OFEN**
COMBUSTION TABLE FOR AN OVEN
PLAN DE CUISSON POUR UN FOUR

(30) Priorität: 03.03.2008 DE 202008002982 U
(43) Veröffentlichungstag der Anmeldung: 20.10.2010
(73) Patentinhaber: Dekema Dental-Keramiköfen GmbH, 83395 Freilassing (DE)
(72) Erfinder: MILLER, Stefan, 83278 Traunstein (DE)
(74) Vertreter: Manitz, Finsterwald & Partner GbR
(86) Internationale Anmeldenummer: PCT/EP2009/001343
(87) Internationale Veröffentlichungsnummer: WO 2009/112154

(56) Entgegenhaltungen:
- DE-A1- 3 224 203
- DE-B- 1 081 816
- DE-C- 384 985
- GB-A- 718 505

## Beschreibung

Die vorliegende Erfindung betrifft einen Brenntisch für einen Ofen aus massivem, hochtemperaturbeständigem Material mit einer Unterseite, einer Oberseite und einer Wandung, wobei der Brenntisch aus mindestens zwei Teilen gebildet ist.

Ein solcher Brenntisch ist aus DE 32 24 203 A1 bekannt. Weitere relevante Brenntische sind aus DE 384 985 C und DE 10 81 816 B bekannt.

Derartige Brenntische, die beispielsweise in Brennöfen für Zahnkeramik eingesetzt werden, haben das Problem, dass der Tisch durch hohe Temperaturgradienten zerstört werden kann. Des Weiteren besteht das Problem, dass der Brenntisch aufgrund der hohen Temperaturen schrumpft. Dieser Effekt wird noch durch das auf dem Brenntisch angeordnete Brennhilfsmittel und das Brenngut verstärkt, da diese ein hohes Gewicht aufweisen.

Der Erfindung liegt die Aufgabe zugrunde, einen verbesserten Brenntisch anzugeben, welcher diese Nachteile nicht aufweist.

Diese Aufgabe wird dadurch gelöst, dass der Brenntisch von der Unterseite zur Oberseite verlaufende Stützstäbe aus gegenüber dem umgebenden Material härterem Material aufweist.

Die Stützstäbe dienen vorteilhafterweise zur Abstützung von Brennhilfsmitteln, so dass deren Gewicht und das Gewicht des auf den Brennhilfsmitteln angeordneten Brenngutes von den Stäben aus härterem Material aufgenommen wird. Das weichere Material wird dadurch wiederum geschützt. Die Stützstäbe können beispielsweise aus dicht gesintertem Aluminiumoxid bestehen. Um diese Stäbe gegenüber hohen Temperaturen zu schützen, sind sie bevorzugt in Ausnehmungen des weicheren Materials eingebettet.

Der Aufbau des Brenntisch aus zwei oder mehr Teilen hat den Vorteil, dass Temperaturspannungen besser abgebaut werden können. Bei Teilen des Brenntisches parallel zur Ober- und Unterseite ist der Temperaturgradient von oben nach unten in beiden Teilen jeweils geringer als bei einem einteiligen Brenntisch. Man kann diese Teile dadurch aus den Umgebungstemperaturen angepassten, mechanisch unterschiedlich stabilen, z.B. unterschiedlich porösen, Materialien fertigen. Ein Reißen tritt dadurch deutlich seltener auf.

Bei einer Teilung des Brenntischs senkrecht zur Ober- und Unterseite sind die Temperaturspannungen ebenfalls verringert, da die Teile jeweils für sich kleiner sind als ein einteiliger Brenntisch. Sie haben dadurch, unabhängig voneinander, die Möglichkeit, sich temperaturabhängig auszudehnen bzw. zu schrumpfen.

Auch diese Teile des Brenntischs können aus verschiedenen Materialien bestehen. Bevorzugt ist auf der Unterseite des Brenntischs ein Einsatz aus einem gegenüber dem umgebenden Material härteren Material vorgesehen. Dieses härtere Material dient zur Abstützung des Brenntischs. Das umgebende weichere Material wird dadurch vor einer Zerstörung geschützt. Üblicherweise ist nämlich das hochtemperaturbeständige Material von Brenntischen relativ weich. Beispielsweise handelt es sich hierbei um weniger dichtes, poröses Aluminiumoxid. Der Einsatz kann aus weniger temperaturbeständigem dafür härterem Material bestehen, beispielsweise aus Kalziumoxid, da im unteren Bereich des Brenntischs geringere Temperaturen herrschen.

Der Brenntisch weist des Weiteren bevorzugt einen Absatz auf, der bei geschlossenem Ofen an einer Isolierung des Ofens anliegt. Hierdurch wird eine besonders gute Isolierung des Ofeninneren erreicht.

Nach einer weiteren Ausgestaltung der Erfindung weist der Brenntisch einen weiteren Absatz auf zur Abstützung eines ringförmigen Brennhilfsmittels. Der Ring ist dadurch besonders sicher abgestützt. Die Höhe des Rings ist bevorzugt größer als die Höhe des Absatzes, so dass zwischen der Oberseite des Rings und dem Brenntisch ein Abstand besteht. Dadurch ergibt sich eine thermische Entkopplung zwischen der Oberseite des Rings und dem Brenntisch. Auf die Oberseite des Rings wird üblicherweise eine Platte oder ein Tiegel aufgelegt, auf der bzw. dem dann das Brenngut angeordnet wird. Damit ist auch das Brenngut gegenüber dem Brenntisch thermisch entkoppelt.

Zwischen den Teilen des Brenntischs besteht bevorzugt eine Formschlussverbindung. Beispielsweise kann das Unterteil des Brenntischs eine zentrale Ausnehmung in der Oberseite aufweisen, in welche das Oberteil des Brenntischs eingesetzt ist. Weiterhin kann das Unterteil selbst aus zwei Teilen bestehen, die mit einer Schwalbenschwanzverbindung miteinander verbunden sind. Auch die Stützstäbe sind bevorzugt formschlüssig in Aufnahmen des Brenntischs eingesetzt. Durch solche Formschlussverbindungen ergibt sich ein stabiler Aufbau des Brenntischs.

Ausführungsbeispiele der Erfindung sind in den Zeichnungen dargestellt und werden nachfolgend beschrieben. Es zeigen, jeweils in schematischer Darstellung:
- Fig. 1: einen Brennofen mit ausgefahrenem Brenntisch,
- Fig. 2: einen geteilten Brenntisch,
- Fig. 3: den Brenntisch von Fig. 2, teilweise zerlegt,
- Fig. 4: zwei Brenntische mit Brennhilfsmitteln,
- Fig. 5: einen zerlegten erfindungsgemäßen Brenntisch mit Stützstäben,
- Fig. 6: den Brenntisch von Fig. 5 in zusammengebautem Zustand und
- Fig. 7: die Unterseite eines Brenntischs mit Einsatz.

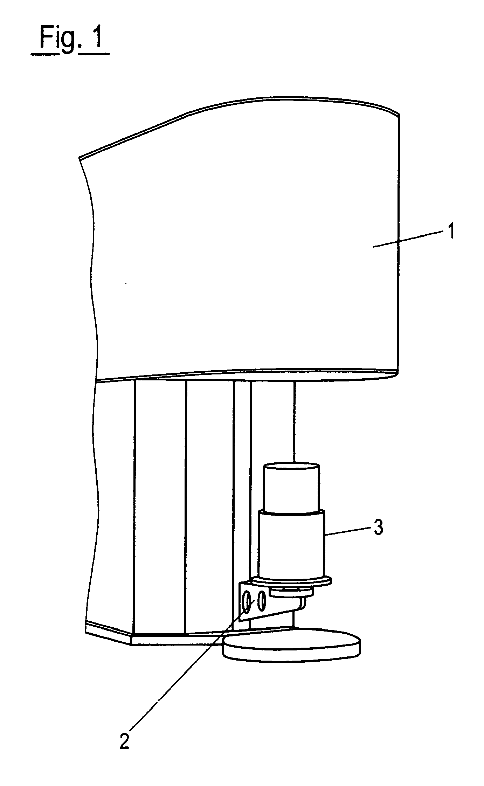

Der in Fig. 1 dargestellte Brennofen umfasst ein Gehäuse 1, in welchem eine Brennkammer angeordnet ist. Über einen Lift 2 kann ein Brenntisch 3 in die Brennkammer eingefahren werden. Auf dem Brenntisch 3 wird das Brenngut, gegebenenfalls mit Brennhilfsmitteln, angeordnet.

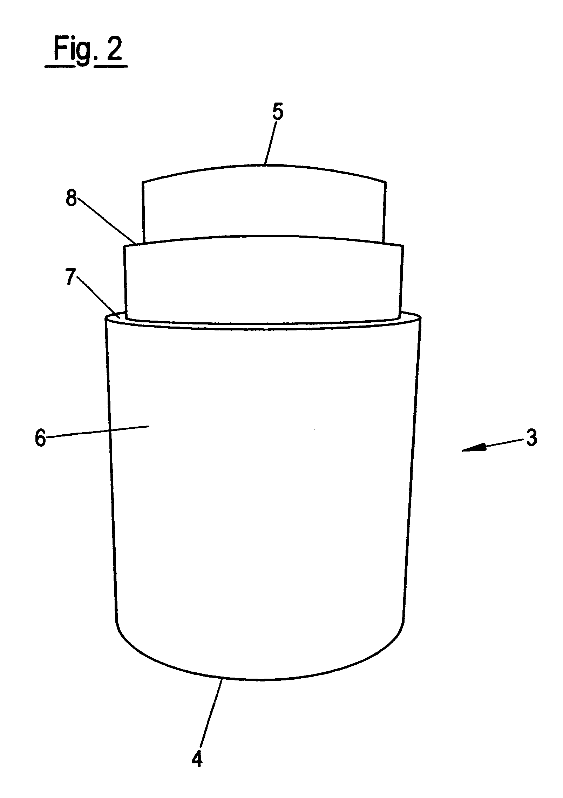

Der in Fig. 2 dargestellte Brenntisch 3 umfasst eine Unterseite 4, eine Oberseite 5 und eine Wandung 6. Der Brenntisch 3 weist einen ersten Absatz 7 auf, der bei eingefahrenem Brenntisch an der Isolierung des Brennofens 1 anliegt. Des Weiteren weist der Brenntisch 3 einen zweiten Absatz 8 auf, auf welchem ein ringförmiges Brennhilfsmittel abstützbar ist.

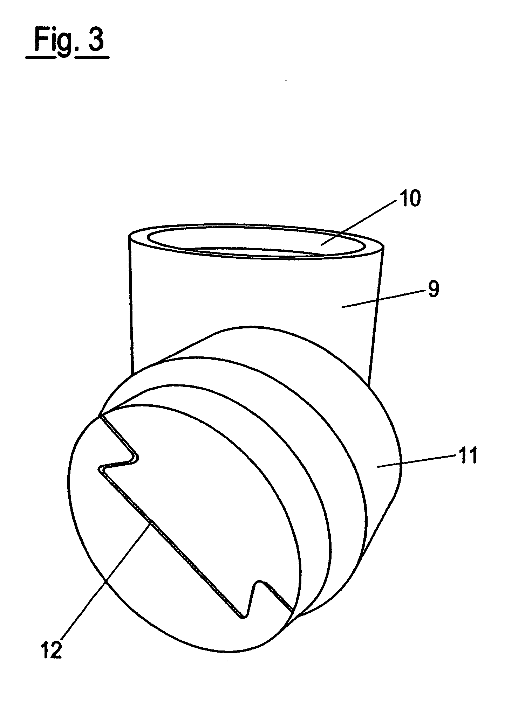

Wie in Fig. 3 dargestellt, weist der Brenntisch 3 ein Unterteil 9 auf, welches auf seiner Oberseite mit einer Ausnehmung 10 versehen ist. In die Ausnehmung 10 ist das Oberteil 11 des Brenntischs 3 einsetzbar. Das Oberteil 11 ist ebenfalls zweiteilig ausgebildet, wobei die Teilung senkrecht zur Oberseite 5 des Brenntischs verläuft. Die Trennlinie 12 ist schwalbenschwanzförmig ausgebildet.

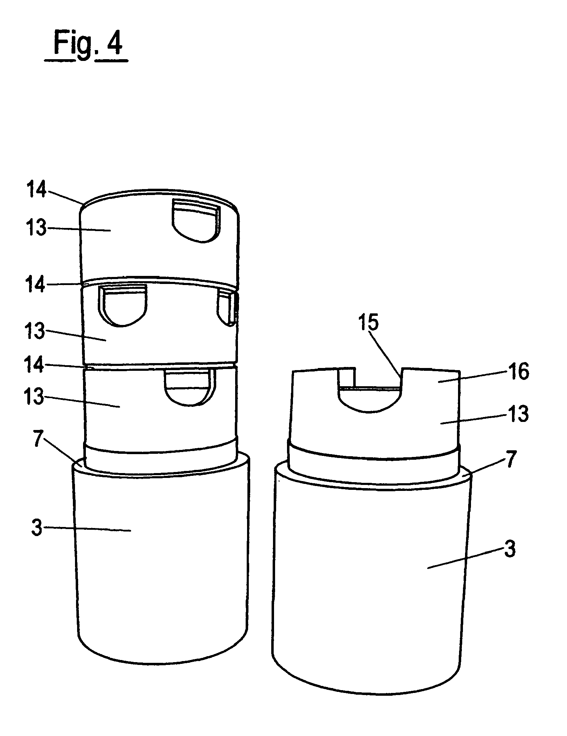

Fig. 4 zeigt, wie Brennhilfsmittel auf den oberen Absatz 8 des Brenntischs 3 aufsetzbar sind. Die Brennhilfsmittel umfassen Ringe 13 und Platten 14, wobei die Ringe 13 an ihrem oberen Rand mit U-förmigen Ausnehmungen 15 versehen sind. Jeder Ring 13 weist vier gleichmä-βig über den Umfang verteilte Ausnehmungen 15 auf, so dass vier Zinnen 16 gebildet sind, auf denen sich die Platten 14 abstützen. Wie man in Fig. 4 erkennt, ist die Breite der Ringe 13 so groß gewählt, dass zwischen der Platte 14 und der Oberseite 5 des Brenntischs 3 ein Abstand besteht.

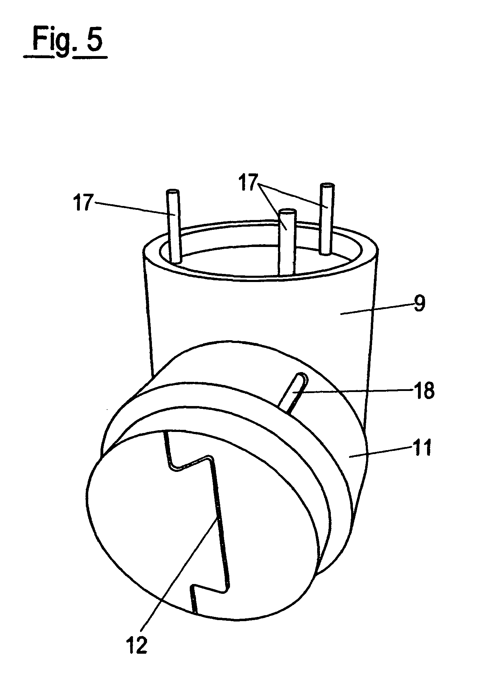

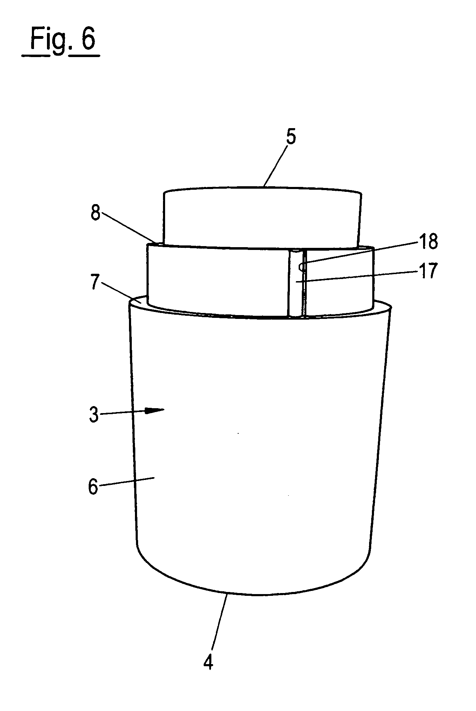

Fig. 5 zeigt einen erfindungsgemäßen Brenntisch 3 mit drei Stützstäben 17. Die Stützstäbe 17 bestehen aus einem Material, welches härter ist als das übrige Brenntischmaterial. Die Stützstäbe 17 sind in Ausnehmungen 18 des Oberteils 11 eingesetzt und dienen zur Abstützung der Brennhilfsmittel 13. Wie man in Fig. 6 erkennt, ist die Länge der Stützstäbe 17 so gewählt, dass ihr oberes Ende bündig mit dem Absatz 8 des Brenntischs 3 abschließt.

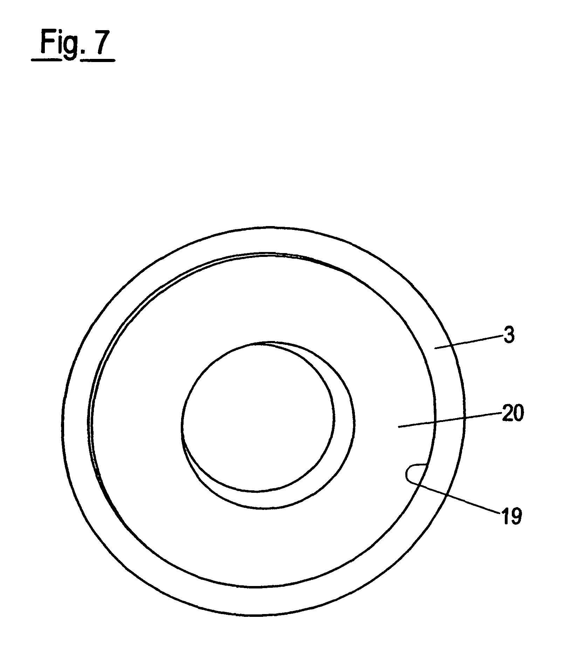

Fig. 7 zeigt die Unterseite 4 eines Brenntischs 3. Diese Unterseite ist mit einer Ausnehmung 19 versehen, in welche ein ringförmiger Einsatz 20 eingesetzt ist. Der Einsatz 20 besteht wie die Stäbe 17 aus einem Material, welches härter ist als das umgebende Brenntischmaterial. Über den Einsatz 20 stützt sich der Brenntisch 3 nach unten hin, also insbesondere auf dem Lift 2 ab.

Der erfindungsgemäße Brenntisch 3 kann auch mehr als drei Teile aufweisen. Als Material für den Brenntisch kommt insbesondere poröses Aluminiumoxid in Betracht. Die härteren Teile wie Einsatz 20 und Stützstäbe 17 bestehen bevorzugt aus Kalziumoxid oder aus dichtgesintertem Aluminiumoxid. Anstatt mit vier Zinnen 16 können die Ringe 13 auch mit drei oder mit mehr Zinnen ausgebildet sein. Wie in Fig. 4 dargestellt, können auf dem Brenntisch 3 mehrere Brennhilfsmittel 13, 14 angeordnet werden. Insbesondere sind bis zu drei Brennringe 13 und drei Platten 14 vorgesehen. Statt Platten und Ringen können auf dem ersten Ring 15 auch Tiegel verwendet werden. Auch diese Tiegel können, analog zu den Brennringen 13, entsprechende Ausnehmungen aufweisen.

### Bezugszeichenliste

- 1: Ofengehäuse
- 2: Lift
- 3: Brenntisch
- 4: Unterseite von 3
- 5: Oberseite von 3
- 6: Wandung von 3
- 7: erster Absatz
- 8: zweiter Absatz
- 9: Unterteil von 3
- 10: Ausnehmung in 9
- 11: Oberteil von 3
- 12: Trennlinie
- 13: Ring
- 14: Platte
- 15: Ausnehmung
- 16: Zinne
- 17: Stützstab
- 18: Ausnehmung
- 19: Ausnehmung
- 20: Stützring

## Patentansprüche

1. Brenntisch für einen Ofen für Zahnkeramik aus massivem, hochtemperaturbeständigem Material mit einer Unterseite (4), einer Oberseite (5) und einer Wandung (6), wobei der Brenntisch (3) aus mindestens zwei Teilen (9, 11) gebildet ist,
**dadurch gekennzeichnet, dass**
der Brenntisch (3) von der Unterseite (4) zur Oberseite (5) verlaufende Stützstäbe (17) aus gegenüber dem umgebenden Material härterem Material aufweist.

2. Brenntisch nach Anspruch 1,
**dadurch gekennzeichnet, dass**
der Brenntisch (3) parallel zu Unter- und Oberseite (4, 5) geteilt ist.

3. Brenntisch nach Anspruch 1 oder 2,
**dadurch gekennzeichnet, dass**
der Brenntisch (3) senkrecht zu Unter- und Oberseite (4, 5) geteilt ist.

4. Brenntisch nach einem der vorhergehenden Ansprüche,
**dadurch gekennzeichnet, dass**
der Brenntisch (3) aus mindestens zwei unterschiedlich porösen Materialien besteht.

5. Brenntisch nach einem der vorhergehenden Ansprüche,
**dadurch gekennzeichnet, dass**
der Brenntisch (3) auf seiner Unterseite (4) einen Einsatz (20) aus gegenüber dem umgebenden Material härterem Material aufweist.

6. Brenntisch nach einem der vorhergehenden Ansprüche,
**dadurch gekennzeichnet, dass**
der Brenntisch (3) einen Absatz (7) aufweist, der zur Anlage an eine Isolierung eines Ofens bei geschlossenem Ofen ausgebildet ist.

7. Brenntisch nach einem der vorhergehenden Ansprüche,
**dadurch gekennzeichnet, dass**
der Brenntisch (3) einen Absatz (8) aufweist zur Abstützung eines ringförmigen Brennhilfsmittels (13).

8. Brenntisch nach einem der vorhergehenden Ansprüche,
**dadurch gekennzeichnet, dass**
zwischen den Teilen (9, 11) des Brenntischs (3) eine Formschlussverbindung vorhanden ist.

## Claims

1. A firing table for a furnace for dental ceramics made from solid refractory material having a lower side (4), an upper side (5) and a wall (6), wherein
the firing table (3) is made of at least two parts (9, 11),
**characterized in that** the firing table (3) has support bars (17) of material harder with respect to the surrounding material and extending from the lower side (4) to the upper side (5).

2. A firing table in accordance with claim 1, **characterized in that** the firing table (3) is divided parallel to the upper and lower sides (4, 5).

3. A firing table in accordance with claim 1 or claim 2, **characterized in that** the firing table (3) is divided perpendicular to the upper and lower sides (4, 5).

4. A firing table in accordance with any one of the preceding claims, **characterized in that** the firing table (3) is made from at least two different porous materials.

5. A firing table in accordance with any one of the preceding claims, **characterized in that** the firing table (3) has an insert (20) of material harder with respect to the surrounding material on its lower side (4).

6. A firing table in accordance with any one of the preceding claims, **characterized in that** the firing table (3) has a shoulder (7) which is designed to contact an insulation of a furnace with a closed furnace.

7. A firing table in accordance with any one of the preceding claims, **characterized in that** the firing table (3) has a shoulder (8) for the support of a ring-shaped piece of kiln furniture (13).

8. A firing table in accordance with any one of the preceding claims, **characterized in that** a shape-matched connection is present between the parts (9, 11) of the firing table (3).

## Revendications

1. Table de cuisson pour un four destiné à des céramiques dentaires, en matériau massif réfractaire à haute température présentant une face inférieure (4), une face supérieure (5) et une paroi (6), dans laquelle la table de cuisson (3) est formée d'au moins deux parties (9, 11),
**caractérisée en ce que** la table de cuisson (3) comprend des tiges de soutien (17) s'étendant de la face inférieure (4) à la face supérieure (5) en un matériau plus dur vis-à-vis du matériau environnant.

2. Table de cuisson selon la revendication 1,
**caractérisée en ce que** la table de cuisson (3) est subdivisée parallèlement à la face inférieure et à la face supérieure (4, 5).

3. Table de cuisson selon la revendication 1 2,
**caractérisée en ce que** la table de cuisson (3) est subdivisée perpendiculairement à la face inférieure et à la face supérieure (4, 5).

4. Table de cuisson selon l'une des revendications précédentes,
**caractérisée en ce que** la table de cuisson (3) est constituée en au moins deux matériaux de porosité différente.

5. Table de cuisson selon l'une des revendications précédentes,
**caractérisée en ce que** la table de cuisson (3) comprend à sa face inférieure (4) un insert (20) en un matériau plus dur vis-à-vis du matériau environnant.

6. Table de cuisson selon l'une des revendications précédentes,
**caractérisée en ce que** la table de cuisson (3) comporte un talon (7) qui est réalisé pour venir en contact contre une isolation d'un four lorsque le four est fermé.

7. Table de cuisson selon l'une des revendications précédentes,
**caractérisée en ce que** la table de cuisson (3) comporte un talon (8) pour soutenir un accessoire de cuisson (13) de forme annulaire.

8. Table de cuisson selon l'une des revendications précédentes,
**caractérisée en ce qu'**une liaison à coopération de formes est prévue entre les parties (9, 11) de la table de cuisson (3).
